Europäisches Patentamt

European Patent Office

Office européen des brevets

(19)

(11) Veröffentlichungsnummer: **0 009 656**
**A1**

(12) # EUROPÄISCHE PATENTANMELDUNG

(21) Anmeldenummer: **79103327.7**

(22) Anmeldetag: **07.09.79**

(51) Int. Cl.³: **B 60 J 3/02**
**F 16 C 11/04**

(30) Priorität: **06.10.78 DE 7829809 U**

(43) Veröffentlichungstag der Anmeldung:
**16.04.80 Patentblatt 80/8**

(84) Benannte Vertragsstaaten:
**FR GB IT SE**

(71) Anmelder: **Gebr. Happich GmbH**
**Postfach 10 02 49 Clausenbrücke 1**
**D-5600 Wuppertal 1(DE)**

(72) Erfinder: **Scherello, Günter, Dipl.-Ing.**
**Looker Strasse 11**
**D-5620 Velbert 11(DE)**

(72) Erfinder: **Meyer, Wilhelm**
**Funckstrasse 41**
**D-5600 Wuppertal 1(DE)**

(54) **Schwenklager für Sonnenblenden von Fahrzeugen.**

(57) Ein Schwenklager für Sonnenblenden von Fahrzeugen besteht aus einer Lagerachse (1) und einem Lagerböckchen (2) mit einer Lageraufnahme (4) zur Aufnahme eines Endbereiches der Lagerachse (1). Die Lagerachse (1) ist dabei aus einem festen formhaltenden Werkstoff und das Lagerböckchen (2) aus einem weitgehend formstabilen, jedoch einen kalten Fluß zulassenden Werkstoff gebildet.

Zur Erzielung des erforderlichen Drehmomentes und zur axialen Arretierung der Lagerachse (1) in der Lageraufnahme (4) weist die Lagerachse (1) an dem in die Lageraufnahme (4) eingreifenden Bereich eine sägezahnartige Profilierung (3) auf.

Figur 1

Figur 2

EP 0 009 656 A1

- 1 -

H 773                                    6.9.1979 Pom/Sch.


GEBR. HAPPICH GMBH, D 5600 WUPPERTAL
Bundesrepublik Deutschland


Schwenklager für Sonnenblenden von Fahrzeugen

Die Erfindung bezieht sich auf ein Schwenklager für Sonnenblenden von Fahrzeugen, bei dem die Lagerachse aus einem festen formhaltenden Werkstoff und das Lagerböckchen aus einem weitgehend formstabilen, jedoch einen kalten Fluß zulassenden Werkstoff besteht.

Durch das deutsche Gebrauchsmuster 7 531 982 ist bereits ein Schwenklager bekanntgeworden, welches ohne weitere Bauteile nur aus einer Lagerachse und einem Lagerböckchen besteht. Bei diesem konstruktiv einfachen Lager bestehen aber herstellungstechnische Schwierigkeiten, so die genaue Abstimmung der Durchmesser der einzelnen zusammenwirkenden Bereiche von Lagerachse und Lagerböckchen und die Formgebung der Lagerachsenaufnahme im Lagerböckchen.

Es ist Aufgabe der Erfindung, ein Schwenklager für Sonnenblenden zu schaffen, welches bei Beibehaltung der günstigen Zweiteiligkeit die bauliche Ausgestaltung vereinfacht, und daß bei der Herstellung auftretende Toleranzen durch bauliche Maßnahmen kompensiert werden.

Die Aufgabe wird erfindungsgemäß dadurch gelöst, daß die Lagerachse in dem vom Lagerböckchen aufgenommenen glattwandigen Bereich mit Profilen versehen ist, welche in Schwenkrichtung des Lagers einen gleichbleibenden Querschnitt aufweisen. Durch den von der Gattung her bestimmten Werkstoff für das Lagerböckchen, nämlich daß dieses aus einem Material besteht, welches bei entsprechender Belastung einen kalten Fluß zuläßt, ist es möglich, die Innenwandungen der Lageraufnahme des Lagerböckchens glattwandig herzustellen. Es bleibt dabei ohne Belang, ob die Lageraufnahme zylindrisch, konisch oder tonnenförmig ausgebildet ist. Die notwendige Gestaltung für den Aufbau des Drehmomentes, insbesondere jedoch die Sicherung gegen einen Auszug der Lagerachse aus dem Lagerböckchen, wird durch die Profile gebildet, welche die Lagerachse bereits aufweist.

Um die Wirkung des Drehmomentes und die Sicherung gegen einen Auszug der Lagerachse aus dem Lagerböckchen auch bei einer geringen Baugröße möglichst groß zu gestalten, erweist es sich als zweckmäßig, das Profil aus um die Lagerachse umlaufenden Nuten und Kämmen zu bilden. Diese sind nämlich auch auf einer kurzen Strecke in einer größeren Anzahl anbringbar. Soll einer Verschieberichtung, wie der Auszugsrichtung, eine bevorzugte Sicherung gegeben werden, so erweist es sich als zweckmäßig, wenn die aus Nut und Kamm gebildeten Profile in Auszugsrichtung der Lagerachse steiler als in Einschubrichtung ausgebildet sind.

Auf der Zeichnung ist die Erfindung in einem Ausführungsbeispiel dargestellt. Es zeigen

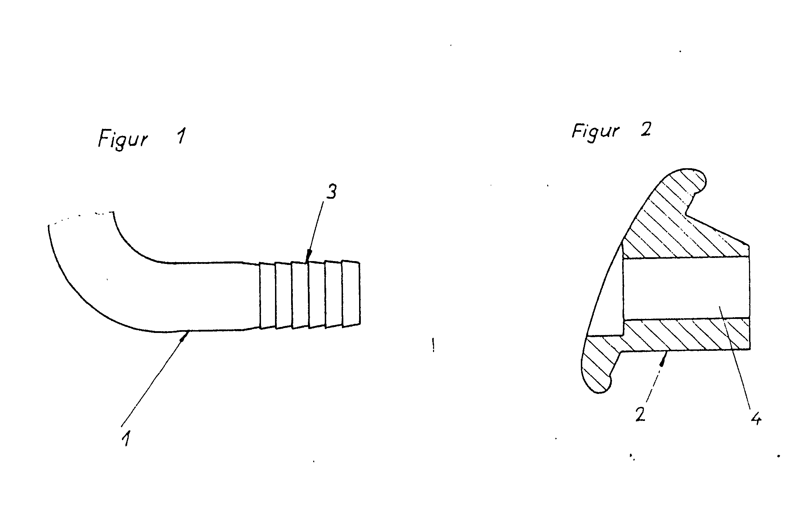

Fig. 1 einen Teil einer Lagerachse und

Fig. 2 ein Lagerböckchen im Schnitt.

Mit 1 ist eine Lagerachse und mit 2 ein Lagerböckchen
bezeichnet. Während die Lagerachse 1 in dem Bereich,
mit dem sie vom Lagerböckchen 2 aufgenommen wird, mit
umlaufenden Profilen 3 versehen ist, ist die Lageraufnahme 4 des Lagerböckchens 2 glattwandig ausgebildet.
Der Durchmesser der Kammbereiche der Profile 3 ist
größer als der Durchmesser der Lageraufnahme 4. Die
Materialbeschaffenheit, nämlich einerseits weitgehend
formstabil, jedoch einen kalten Fluß zulassend, für
den Werkstoff des Lagerböckchens 2, läßt unter Überwindung einer gewissen Einschubkraft eine Montage zu,
ohne jedoch in dem kurzen Einschubmoment die Lagerachsenaufnahmewandung aufzuweiten. Durch den über eine
längere Zeit hinausgehenden Druck, der sich aus der
Zusammenziehung des Lagerböckchens aufbaut, entsteht
eine größere Verformung der Lageraufnahme 4 durch die
Profile 3 der Lagerachse 1. Oder anders ausgedrückt,
die Lageraufnahme 4 paßt sich nach einer gewissen
Übergangszeit vollständig oder zumindest weitgehend
den Profilen 3 der Lagerachse 1 an.

- 1 -

H 773                                    6.9.1979 Pom/Sch.

Patentansprüche:

1. Schwenklager für Sonnenblenden von Fahrzeugen, bei dem
die Lagerachse (1) aus einem festen formhaltenden
Werkstoff und das Lagerböckchen (2) aus einem weitgehend formstabilen, jedoch einen kalten Fluß zulassenden Werkstoff besteht,
dadurch gekennzeichnet,
daß die Lagerachse (1) in der vom Lagerböckchen (2)
aufgenommenen glattwandigen Lageraufnahme (4) mit
Profilen (3) versehen ist, welche in Schwenkrichtung
des Lagers (1, 2) einen gleichbleibenden Querschnitt
aufweisen.

2. Schwenklager nach Patentanspruch 1,
dadurch gekennzeichnet,
daß die Profile (3) aus um die Lagerachse (1) umlaufenden Nuten und Kämmen gebildet sind.

3. Schwenklager nach Patentanspruch 2,
dadurch gekennzeichnet,
daß die aus Nut und Kamm gebildeten Profile (3) in
Auszugsrichtung der Lagerachse (1) steiler als in
Einschubrichtung ausgebildet sind.

Figur 2

Figur 1

0009656

| | EINSCHLÄGIGE DOKUMENTE | | | KLASSIFIKATION DER ANMELDUNG (Int.Cl.3) |
|---|---|---|---|---|
| Kategorie | Kennzeichnung des Dokuments mit Angabe, soweit erforderlich, der maßgeblichen Teile | betrifft Anspruch | | |
| X | DE – A – 2 352 757 (W.A. DEUTSCHER PROPRIETARY) <br> * Seite 3, Zeile 1; Fig. 3 und 4 * <br> -- | 1,2 | | B 60 J 3/02 <br> F 16 C 11/04 |
| | DE – U – 1 823 587 (J. TERBRACK) <br> * Seite 2, Zeile 10; Fig. 4 * <br> -- | 1-3 | | |
| | US – A – 3 475 042 (S.F. SPEERS et al.) <br> * Fig. 1 * <br> -- | 1-3 | | RECHERCHIERTE SACHGEBIETE (Int. Cl.3) |
| D | DE – U – 7 531 982 (HAPPICH) <br> * ganzes Dokument * <br> ---- | | | B 60 J 3/00 <br> F 16 C 11/00 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 29-10-1979 | BECKER |